# EUROPÄISCHE PATENTSCHRIFT

(11) **EP 3 608 692 B1**
(45) Veröffentlichungstag und Bekanntmachung des Hinweises auf die Patenterteilung: **01.10.2025**
(21) Anmeldenummer: 19190172.7
(22) Anmeldetag: 06.08.2019
(51) Int. Cl.: G01S 19/21, G01S 19/36

(54) **VERFAHREN ZUM UMRÜSTEN EINER STÖRSCHUTZFREIEN GNSS-EMPFANGSANLAGE IN EINE CRPA-EMPFANGSANLAGE**
METHOD FOR CONVERTING AN INTERFERENCE PROTECTION FREE GNSS RECEIVING INSTALLATION INTO A CRPA RECEIVING INSTALLATION
PROCÉDÉ DE TRANSFORMATION D'UNE INSTALLATION DE RÉCEPTION GNSS SANS PROTECTION CONTRE LES PARASITES EN UNE INSTALLATION DE RÉCEPTION CRPA

(30) Priorität: 07.08.2018 DE 102018006225
(43) Veröffentlichungstag der Anmeldung: 12.02.2020
(73) Patentinhaber: Diehl Defence GmbH & Co. KG, 88662 ÜBERLINGEN (DE)
(72) Erfinder: Drummer, Clemens, 91301 Forchheim (DE); Burkhardt, Robert, 91207 Lauf (DE)
(74) Vertreter: Diehl Patentabteilung

(56) Entgegenhaltungen:
- EP-A1- 2 428 819
- WO-A2-2016/085554
- US-A1- 2005 242 991
- MCMILIN EMILY ET AL: "Field Test Validation of Single-Element Antenna with Anti-Jam and Spoof Detection", GNSS 2015 - PROCEEDINGS OF THE 28TH INTERNATIONAL TECHNICAL MEETING OF THE SATELLITE DIVISION OF THE INSTITUTE OF NAVIGATION (ION GNSS+ 2015), THE INSTITUTE OF NAVIGATION, 8551 RIXLEW LANESUITE 360MANASSAS, VA 20109, USA, 18 September 2015 (2015-09-18), pages 3314 - 3324, XP056010872
- NOVATEL: "Defense GAJT-AE-N (TM) GPS ANTI-JAM TECHNOLOGY (GAJT ) ANTENNA ELECTRONICS FOR SMALLER PLATFORMS JAMMING AND INTERFERENCE ARE HERE TO STAY", 30 December 2016 (2016-12-30), XP055651407, Retrieved from the Internet <URL:https://www.novatel.com/assets/Documents/Papers/GAJT-AE-N-PS.pdf> [retrieved on 20191210]
- STEVENS M ET AL: "MILITARY GPS RECEIVERS FOR NAVAL USE", PROCEEDINGS OF THE INSTITUTE OF NAVIGATION (ION) GPS, XX, XX, 1 January 1990 (1990-01-01), pages 65 - 70, XP000943603
- FELIX BUTSCH: "A Concept for GNSS Interference Monitoring", PROCEEDINGS OF THE INSTITUTE OF NAVIGATION (ION) GPS, XX, XX, no. 12th, 14 September 1999 (1999-09-14), pages 125 - 135, XP007903712

## Beschreibung

Die Erfindung betrifft ein Verfahren zum Umrüsten einer störschutzfreien GNSS-Empfangsanlage in eine entstörende CRPA-Empfangsanlage, bei dem eine bestehende GNSS-Antenne gegen eine CRPA-Antenne mit einer CRPA-Entstöreinheit ausgetauscht wird.

Fahrzeuge zu Land, zu Wasser und in der Luft nutzen das globale Navigationssatellitensystem (GNSS) zur Bestimmung der eigenen Position. Je nach Herkunftsland des Fahrzeugs können nationale beziehungsweise regionale Systeme genutzt werden, wie das System NAVSTAR GPS der Vereinigten Staaten von Amerika, GLONASS der Russischen Föderation, Galileo der Europäischen Union oder Beidou der Volksrepublik China. Aus Signallaufzeiten von Signalen mehrerer Satelliten wird die eigene Position ermittelt und zur Navigation des Fahrzeugs verwendet.

Gerade im militärischen Bereich existieren Systeme für elektronische Gegenmaßnahmen, die die Navigation herankommender Fahrzeuge behindern sollen. So wird beispielsweise durch sogenanntes Noise-Jamming mit der Frequenz von GNSS-Satelliten ein weißes Rauschen mit sehr hohem Pegel gesendet, in dem das eigentliche Satellitensystem untergeht. Das Signal-Rausch-Verhältnis des Empfängers ist so schlecht, dass er das ursprüngliche Satellitensignal nicht mehr empfangen kann. Eine weitere Methode ist das sogenannte Spoofing, bei dem auf der Frequenz der Satellitensignale Störsignale versendet werden, die falsche Positionen vortäuschen.

Zum Schutz vor solchen elektronischen Maßnahmen sind sogenannte CRPA-Antennen bekannt (Controlled Radiation Pattern Antenna). Eine CRPA-Antenne umfasst mehrere Einzelantennen, mit denen die Richtung der ankommenden Signale ermittelt werden kann. Da Störsignale üblicherweise nicht aus der gleichen Richtung wie die originären Satellitensignale kommen, können sie durch ein gezieltes Ausblenden von derart berechneten Empfangsrichtungen so stark unterdrückt werden, dass das originäre Satellitensignal aus der Satellitenrichtung empfangbar und auswertbar bleibt. Zum Erhalt der Navigationsfähigkeit ist es daher vorteilhaft, ein Fahrzeug mit einer störschutzfreien GNSS-Empfangsanlage mit einer CRPA-Empfangsanlage umzurüsten.

Die WO 2016/085554 A2 offenbart eine Vorrichtung mit einer GPS-Antenne und einer Steuerschaltung, die konfiguriert ist, um einen Betriebsmodus der Vorrichtung von einem normalen Modus zum Empfangen von von einem GPS-Satelliten übertragenen Signalen in mindestens einen zweiten Modus zu ändern, um ein Fälschungssignal zu erfassen und / oder eine Null zu steuern.

Aus der US 2005/0242991 A1 ist ein GNSS-Empfängersystem bekannt mit einer Verarbeitungseinheit, einer oder mehrerer Antenneneinheiten zum Empfangen von GNSS-Signalen und mindestens einem Kommunikationskanal in Form eines HF-Koaxialkabels zwischen jeder Antenneneinheit und der Verarbeitungseinheit. Die eine oder die mehreren Antenneneinheiten enthalten ein Antennenelement mit einem Phasenzentrum, wobei benachbart zu den Phasenzentren ein oder mehrere Trägheitssensoreinheiten positioniert sind, deren Messdaten über den Kommunikationskanal übertragen werden.

Die Produktbeschreibung "Defense GAJT-AE-N (TM) GPS ANTI-JAM TECHNOLOGY (GAJT) ANTENNA ELECTRONICS FOR SMALLER PLATFORMS JAMMING AND INTERFERENCE ARE HERE TO STAY" von Novatel vom 30.12.2006 beschreibt eine Elektronikeinheit für eine CRPA-Antenne für kleine unbemannte Plattformen. Der RF-Ausgang der Elektronikeinheit ist kompatibel zum Eingang bestehender GPS-Empfänger.

Die Veröffentlichung "A Concept for GNSS Interference Monitoring" von Felix Butsch, Proceedings of the Institute of Navigation (ION) GPS, 14. September 1999, Seiten 125 - 135 beschäftigt sich mit der Beobachtung von Signalen, die die Qualität von GPS- und GLONASS-Signalen beeinträchtigen könnten. Zu diesem Zweck werden in regelmäßigen Abständen (z.B. einmal pro Sekunde) die im Frequenzbereich von GPS und GLONASS empfangenen Signale und ihre Signaleigenschaften ausgewertet. Ziel ist es, die Auswirkungen auf das Satellitennavigationssignal zu bewerten und Informationen über die Quelle des Interferenzsignals zu gewinnen. Hierfür kommt eine Überwachungsstation "Monitoring Station", die beispielsweise einen PC umfasst, zum Einsatz.

Die EP2 428 819 A1 beschäftigt sich mit der operativen Kopplung einer GNSS-Antenne, eines GNSS-Empfängers, eines Prozessors zur Ausführung von in einem Speicher kodierten Spektrumanalyseanweisungen und einer Anzeige. Die GNSS-Antenne, der GNSS-Empfänger, der Prozessor, die Anzeige und der Speicher können in einem einzigen Gehäuse untergebracht sein.

Es ist eine Aufgabe der Erfindung, ein Verfahren zum Umrüsten einer störschutzfreien GNSS-Empfangsanlage in eine entstörende CRPA-Empfangsanlage anzugeben, das mit verhältnismäßig geringem Aufwand durchgeführt werden kann.

Diese Aufgabe wird durch ein Verfahren gemäß den Merkmalen von Patentanspruch 1 gelöst, bei dem eine bestehende GNSS-Antenne gegen eine CRPA-Antenne mit einer CRPA-Entstöreinheit ausgetauscht wird und die CRPA-Entstöreinheit über ein bestehendes Koaxialkabel mit einem GNSS-Empfänger, der der Empfänger der ursprünglichen störschutzfreien Anlage sein kann, verbunden wird. Ebenfalls mit dem Koaxialkabel verbunden wird eine Steuereinheit, die über das Koaxialkabel eine bidirektionale Kommunikation mit der CRPA-Entstöreinheit führen kann. Nun kann ein GNSS-Signal mit der CRPA-Antenne empfangen und mit der CRPA-Entstöreinheit entstört werden. Das entstörte Signal kann über das Koaxialkabel zum GNSS-Empfänger geleitet werden. Aus dem entstörten Signal kann der GNSS-Empfänger die Position der Anlage, die beispielsweise Teil eines Fahrzeugs ist, wie eines Landfahrzeugs, eines Luftfahrzeugs oder eines Wasserfahrzeugs, bestimmen.

Die Erfindung geht von der Überlegung aus, dass in bestehenden GNSS-Empfangsanlagen zwischen der GNSS-Antenne und dem GNSS-Empfänger ein Koaxialkabel besteht, über das die Antennensignale an den GNSS-Empfänger gegeben werden zur Berechnung der Position. Soll nun eine Entstörung des GNSS-Signals stattfinden, so ist es vorteilhaft, der CRPA-Entstöreinheit, die eine solche Entstörung durchführt, Steuersignale oder andere digitale Daten zu übermitteln, durch die die Entstörung verbessert oder erst ermöglicht wird. Hierfür kann ein Datenkabel zwischen Steuereinheit und CRPA-Entstöreinheit gelegt werden, über das der digitale Datenverkehr verläuft.

Zum Nach- oder Umrüsten eines Fahrzeugs mit einer CRPA-Empfangsanlage (Controlled Radiation Pattern Antenna), ist das zusätzliche Datenkabel störungsfrei zu verlegen. Bei einer Verwendung auf einem Schiff, bei dem die CRPA-Antenne auf einem Mast in exponierter Stelle angeordnet ist, ist das Datenkabel mit einem Blitzschutz zu versehen. Dies ist je nach Länge der gefährdeten Strecke aufwändig. Bei einem Landfahrzeug kann es notwendig sein, das zusätzliche Datenkabel durch ein Karosserieelement zu führen, das durch eine zusätzliche Öffnung hierdurch geschwächt und neu zugelassen werden muss. Auch dieser Aufwand ist nachteilig.

Diese Nachteile können überwunden werden, indem der Datenverkehr zwischen CRPA-Entstöreinheit und Steuereinheit mit dem GNSS-Signalverkehr kombiniert geführt wird. Auf eine Kabelnachrüstung kann verzichtet werden. Hierfür werden Steuereinheit und CRPA-Entstöreinheit mit dem Koaxialkabel verbunden, beispielsweise über jeweils eine Signalweiche, und beide Einheiten kommunizieren über das Koaxialkabel miteinander.

Die CRPA-Empfangsanlage ist zweckmäßigerweise dazu vorbereitet, eine Erkennung der Position der Anlage beziehungsweise des Fahrzeugs, in dem sich die Anlage befinden kann, durchzuführen. Geeignet ist ein Landfahrzeug, ein Wasserfahrzeug oder ein Luftfahrzeug, worunter im Folgenden auch unbemannte Flugkörper verstanden werden können. Die CRPA-Empfangsanlage ist mit einer CRPA-Antenne mit mehreren Antennen ausgestattet, die jeweils zum Empfangen von GNSS-Signalen ausgeführt sind. Von der CRPA-Antenne empfangene GNSS-Signale werden an die CRPA-Entstöreinheit direkt oder nach einer Signalbearbeitung weitergegeben, die die Signale entstört. Dies geschieht bei einer CRPA-Entstöreinheit durch die zumindest weitgehende Entfernung richtungsspezifischer Signale. Durch die mehreren Antennen können GNSS-Signale, also Satellitensignale oder eine Kombination von Satellitensignalen mit Störsignalen, in Abhängigkeit von ihrer Einfallsrichtung detektiert werden. Eine oder mehrere Einfallsrichtungen können nun gezielt blockiert werden. Die Richtung ist hierbei so zu wählen, dass sie zum Störsender weist. Dessen Signale werden nun unterdrückt beziehungsweise durch einen Rechenalgorithmus aus dem Gesamtsignal zumindest im Wesentlichen entfernt. Übrig bleiben auswertbare Satellitensignale, aus denen die Position der Anlage beziehungsweise des Fahrzeugs errechnet werden kann. Die zumindest weitgehende Entfernung des Störsignals kann rechnerisch aus dem Gesamtsignal erfolgen.

Die vor dem Umrüsten bestehende GNSS-Empfangsanlage ist störschutzfrei, worunter in diesem Zusammenhang verstanden werden kann, dass sie keinen Schutz gegen Jamming und/oder Spoofing aufweist. Bei Anwesenheit eines Jammers beziehungsweise bei einem Überdecken eines Satellitensignals durch einen Jammer kann das Satellitensignal nicht mehr erkannt werden und die Position der Anlage kann nicht ermittelt werden.

Die Steuereinheit ist dazu vorbereitet, die CRPA-Entstöreinheit zu steuern, gemäß der Erfindung neue Software, neue Firmware, auf die CRPA-Entstöreinheit aufzuspielen. Auch ein Abruf von Daten, gemäß der Erfindung ein Empfangsspektrum der CRPA-Antenne, ist vorteilhaft.

Entsprechend der Erfindung wird die CRPA-Entstöreinheit über das Koaxialkabel mit Betriebsspannung versorgt. Auf diese Weise kann das Koaxialkabel nicht nur für Signaldaten und Steuerdaten verwendet werden, sondern auch zur Stromversorgung der CRPA-Entstöreinheit.

Zum Stören des Empfangs von GNSS-Signalen aus Satelliten bestehen eine Vielzahl von möglichen Jamming-Modulationen. Diese sind in der Regel bekannt und entsprechende Entstöralgorithmen sind in der CRPA-Entstöreinheit hinterlegt zum Entstören der empfangenen Signale. Es kann jedoch vorkommen, dass ein neues Störverfahren zur Anwendung kommt, gegen das die CRPA-Entstöreinheit keinen Algorithmus enthält. Das empfangene GNSS-Signal ist nun auf eine entsprechende Modulation zu untersuchen und ein passender Entstöralgorithmus ist herzustellen. Je nach Störverfahren kann dies Stunden oder Tage benötigen. Der neue Entstöralgorithmus kann dann als Firmware auf die CRPA-Entstöreinheit aufgespielt werden. Entsprechend der Erfindung ist vorgesehen, dass von der Steuereinheit über das Koaxialkabel Firmware, auf die CRPA-Entstöreinheit aufgespielt wird. Die Firmware enthält unter anderem ein Software-Update für die CRPA-Entstöreinheit, worunter auch ein neuer Entstöralgorithmus verstanden werden kann.

Zum Kontrollieren der Entstörung und/oder um einen Überblick über vorhandene Jammer zu beschaffen, ist es vorteilhaft, wenn von der CRPA-Entstöreinheit das von der CRPA-Antenne empfangene Signalspektrum abgefragt wird. Dieseswird einem Bediener gemäß der Erfindung grafisch angezeigt, beispielsweise Signalstärken in Abhängigkeit von Signalfrequenzen, sodass die Störungen optisch erkannt und ausgewertet werden können. Entsprechend der Erfindung wird von der Steuereinheit über das Koaxialkabel ein Empfangsspektrum der CRPA-Antenne abgefragt und das Empfangsspektrum von der CRPA-Entstöreinheit über das Koaxialkabel zur Steuereinheit gesendet wird. Der gesamte Datenverkehr kann hierdurch über das Koaxialkabel abgewickelt werden, sodass eine hohe Bandbreite an Steuermechanismen ohne Verwendung eines zusätzlichen Datenkabels abgewickelt werden können.

Weiter ist es sinnvoll, Daten zum An- und Abschalten der CRPA-Entstöreinheit oder einer Funktion der CRPA-Entstöreinheit über das Koaxialkabel von der Steuereinheit an die CRPA-Entstöreinheit zu senden. Ist beispielsweise ein Jamming Pegel so hoch, dass die Entstörelektronik das Signal nicht verarbeiten kann oder sogar droht, dass die Elektronik Schaden nimmt, so kann die CRPA-Entstöreinheit als Ganzes abgeschaltet werden, oder es wird nur eine Funktion von ihr an- oder abgeschaltet, wie beispielsweise eine Filterfunktion.

Außerdem ist es sinnvoll, wenn von der Steuereinheit ein Pegelstärkenänderungsbefehl über das Koaxialkabel an die CRPA-Entstöreinheit gesendet wird. Ist beispielsweise das an den GNSS-Empfänger weitergeleitete Signal zu stark oder zu schwach, kann durch eine entsprechende Pegeländerung ein durch die Empfangseinheit verarbeitbares Signal an diese gegeben werden.

Insgesamt gesehen ist es vorteilhaft, wenn sowohl die CRPA-Entstöreinheit als auch die Steuereinheit über das Koaxialkabel eine bidirektionale Kommunikation führen. Einer effektiven Programmierung der Steuereinheit und/oder der CRPA-Entstöreinheit ist es zuträglich, wenn eine, zweckmäßigerweise beide dieser Einheiten einen FPGA enthalten (Field Programmable Gate Array). Hierbei kann die bidirektionale Kommunikation über das Koaxialkabel zwischen diesen beiden FPGA geführt werden.

Eine besonders vorteilhafte Anwendung für die Erfindung liegt in der Anwendung in einem Seeschiffbereich, wobei die CRPA-Antenne auf einem Schiffsmast angeordnet ist. Das Koaxialkabel kann hierbei vom Schiffsmast bis zu einem Datenverarbeitungsraum reichen, wobei die CRPA-Entstöreinheit ebenfalls auf dem Schiffsmast und die Steuereinheit im Datenverarbeitungsraum angeordnet sein kann. Die bidirektionale Kommunikation zwischen diesen Einheiten kann hierdurch in einfacher Weise über große Strecken im Seeschiff bewältigt werden, ohne dass ein zusätzlicher und sehr langer Blitzschutz für ein Datenkabel installiert werden muss.

Die Erfindung ist außerdem auf ein Verfahren zum Entstören eines GNSS-Signals mit einer CRPA-Entstöreinheit gemäß den Merkmalen von Patentanspruch 6 gerichtet. Ein solches Verfahren kann beispielsweise nach dem Umrüsten der zuvor störschutzfreien GNSS-Empfangsanlage in die entstörende CRPA-Empfangsanlage durchgeführt werden. Bei diesem Verfahren führt die Steuereinheit über ein Koaxialkabel eine bidirektionale Kommunikation mit der CRPA-Entstöreinheit. Das GNSS-Signal wird mit einer CRPA-Antenne empfangen und mit der CRPA-Entstöreinheit entstört und das entstörte Signal wird über das Koaxialkabel zu einem GNSS-Empfänger geleitet. Dort kann das Signal ausgewertet und aus ihm eine Standortbestimmung vorgenommen werden. Dieses Verfahren ist auch mit einem, mehreren oder allen Details des oben beschriebenen Verfahrens durchführbar.

Die Erfindung ist ebenfalls gerichtet auf eine CRPA-Empfangsanlage mit einer CRPA-Antenne zum Empfangen eines GNSS-Signals, einer CRPA-Entstöreinheit zum Entstören des GNSS-Signals, einem GNSS-Empfänger und einem Koaxialkabel zwischen der CRPA-Entstöreinheit und dem GNSS-Empfänger gemäß den Merkmalen von Patentanspruch 7. Zur einfachen Nachrüstung eines Fahrzeugs mit der CRPA-Empfangsanlage wird vorgeschlagen, dass diese eine Steuereinheit aufweist, die über das Koaxialkabel mit der CRPA-Entstöreinheit verbunden ist und für eine bidirektionale Kommunikation mit der CRPA-Entstöreinheit über das Koaxialkabel vorbereitet ist.

Die bisher gegebene Beschreibung vorteilhafter Ausgestaltungen der Erfindung enthält zahlreiche Merkmale, die teilweise in einigen abhängigen Ansprüchen zu mehreren zusammengefasst wiedergegeben sind. Die Merkmale können jedoch zweckmäßigerweise auch einzeln betrachtet und zu sinnvollen weiteren Kombinationen zusammengefasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: eine CRPA-Empfangsanlage mit einer Mehrantennenanordnung, einer CRPA-Entstöreinheit und einer Steuereinheit,
- FIG 2: die Steuereinheit aus FIG 1 in einer schematischen Blockdarstellung und
- FIG 3: eine Signalweiche aus der Steuereinheit.

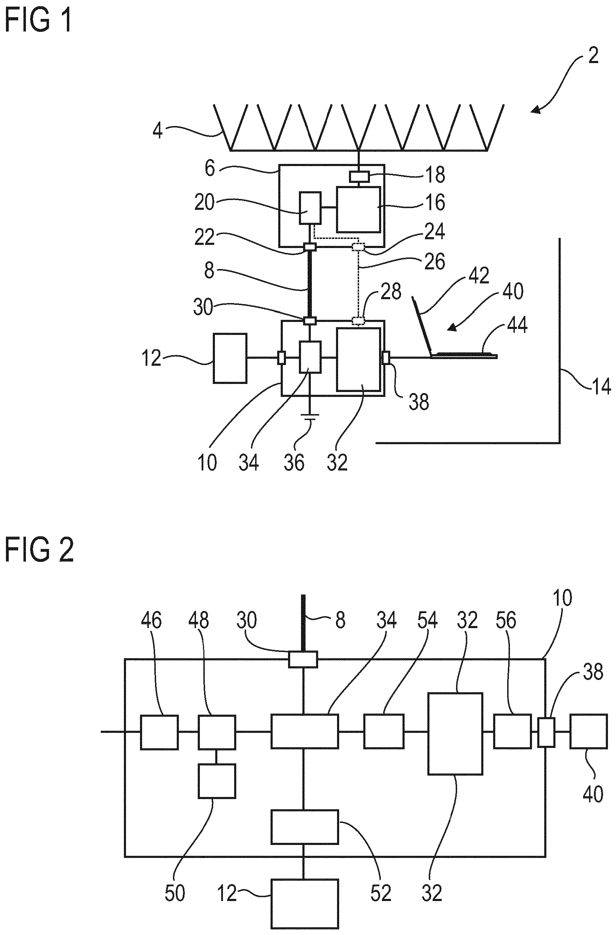

FIG 1 zeigt eine CRPA-Empfangsanlage 2 in einer schematischen Blockschaltbilddarstellung mit einer Anordnung aus mehreren GNSS-Antennen. In diesem Ausführungsbeispiel sind sieben GNSS-Antennen vorhanden, die in ihrer Gesamtheit und Anordnung zueinander eine CRPA-Antenne 4 bilden. Signaltechnisch mit den Antennen verbunden ist eine CRPA-Entstöreinheit 6, die über ein Koaxialkabel 8 mit einer Steuereinheit 10 verbunden ist. Über einen GNSS-Empfänger 12 werden GNSS-Daten aus der GNSS-Antenne in Ortsinformationen beziehungsweise Positionsinformationen der Anlage 2 beziehungsweise des Fahrzeugs 14 bestimmt, innerhalb dessen die CRPA-Empfangsanlage 2 angeordnet ist.

Das Fahrzeug 14 kann ein Landfahrzeug, ein Wasserfahrzeug oder ein Luftfahrzeug sein und ist in FIG 1 nur schematisch angedeutet. Die GNSS-Antennen sind räumlich so zueinander angeordnet, dass sie einfallende GNSS-Signale, innerhalb derer auch Jamming-Störungen, Spoofing-Störungen oder andere Störungen enthalten sein können, räumlich aufgelöst empfangen können. Ihre GNSS-Signale werden der CRPA-Entstöreinheit 6 zugeleitet, die die Signale entstört und in entstörter Form über das Koaxialkabel 8 zur Steuereinheit 10 weiterleitet. Hierzu umfasst die CRPA-Entstöreinheit 6 einen FPGA 16, der die GNSS-Signale von den Antennen über eine Eingangselektronik 18 von den GNSS-Antennen erhält. Der FPGA 16 schlüsselt die Signale räumlich auf und filtert den Jamminganteil durch Unterdrückung der entsprechenden Empfangsrichtung heraus, sodass ein weitgehend ungestörtes GNSS-Signal oder ein GNSS-Signal, das zumindest hinsichtlich der enthaltenen Positionsinformationen auswertbar ist, ausgegeben wird.

Der FPGA 16 gibt sein Ausgabesignal an eine Signalweiche 20, die das Signal über eine Schnittstelle 22 an das Koaxialkabel 8 weitergibt. Über die Signalweiche 20 kann das Signal auch in digitaler Form über eine weitere Schnittstelle 24 und ein Datenkabel 26 an die Steuereinheit 10 oder eine andere geeignete Einheit weitergegeben werden. Dies kann beispielsweise für einen Laborbetrieb sinnvoll sein, wenn eine entsprechende Steuereinheit oder ein Auswertgerät eine zusätzliche Schnittstelle 28 enthält, über die es mit digitalen Steuerdaten bidirektional mit der CRPA-Entstöreinheit 6 kommuniziert.

Im üblichen Betriebsfall kann auf das Datenkabel 26 und die Schnittstellten 24, 28 verzichtet werden, wobei auch die Steuerdaten über das Koaxialkabel 8, das über die Schnittstellen 22, 30 mit der CRPA-Entstöreinheit beziehungsweise der Steuereinheit 10 verbunden ist, geleitet werden. Um darzustellen, dass die CRPA-Empfangsanlage 2 auch mit der Einkabellösung alleine funktionsfähig ist und das Datenkabel 26 nur optional ist, sind die betreffenden Bauelemente in FIG 1 gestrichelt dargestellt.

Die Steuereinheit 10 umfasst ebenfalls einen FPGA 32, der über eine Signalweiche 34 mit der Schnittstelle 30 beziehungsweise dem Koaxialkabel 8 verbunden ist. In der Signalweiche 34 werden die Steuersignale mit den Steuerdaten von und zu dem FPGA 32 von den GNSS-Signalen getrennt, die an den GNSS-Empfänger weitergegeben werden. Außerdem wird eine Betriebsspannung, die von einer Spannungsversorgung 36 bereitgestellt wird, ebenfalls auf das Koaxialkabel 8 gegeben, sodass hierüber die CRPA-Entstöreinheit 6 und die CRPA-Antenne 4 mit Strom versorgt werden. Über eine Schnittstelle 38 kann ein bidirektionaler Datenverkehr mit einem Bedienergerät 40 vorgenommen werden, das beispielsweise eine Anzeigeeinheit 42 und eine Eingabeeinheit 44 umfasst, sodass ein Bediener grafische Informationen auf der Anzeigeeinheit 42 ansehen und Kommandos über die Eingabeeinheit 44 an die Steuereinheit 10 geben kann.

Die Steuereinheit 10 ist in FIG 2 in einer detaillierteren Blockschaltdarstellung gezeigt. Über die Schnittstelle 30 ist das Koaxialkabel 8 mit der Signalweiche 34 verbunden, die eine DC-Weiche ist. Die Spannungsversorgung wird über einen EMV-Filter 46 zu einem DC/DC-Wandler 48 geführt. Optional kann ein Regler 50 für Treiber und Amplifier vorhanden sein. Über die Signalweiche 34 wird der Gleichstrom als Spannungsversorgung in das Koaxialkabel 8 gespeist.

Das GNSS-Signal wird von der Signalweiche 34 über ein optionales Dämpfungsglied 52 zum GNSS-Empfänger 12 geleitet, wo das Signal in eine Positionsinformation gewandelt wird. Die Steuerdaten werden zwischen der Signalweiche 34 und dem FPGA 32 über einen bidirektionalen Umschalter 54 geführt, der beispielsweise nach dem TDMA-Verfahren arbeitet und den bidirektionalen Datenverkehr in einen monodirektionalen Blockverkehr mal in die eine und dann in die andere Richtung umwandelt. Um Informationen vom FPGA 32 zum Bedienergerät 40 auszugeben, schützt ein EMV-Filter 56 den Datenverkehr.

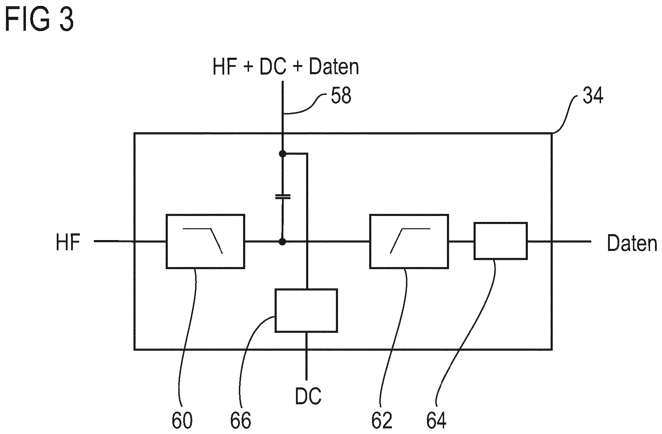

FIG 3 zeigt die Signalweiche 34 in einem detaillierteren Blockschaltbild. Die Richtung zum Koaxialkabel 8 ist mit dem Bezugszeichen 58 gekennzeichnet. In dieser Datenverbindung liegen - wie auch in dem Koaxialkabel 8 - das Hochfrequenzsignal zusammen mit den Steuerdaten und der Gleichstromversorgung gemeinsam vor. Das Hochfrequenzsignal, also die GNSS-Daten, werden über einen Hochpassfilter 60 zum GNSS-Empfänger 12 gegeben. Über einen Tiefpassfilter 62 und einen optionalen DC-Block 64 werden die Steuerdaten in Richtung zum FPGA 32 gegeben. Und vor dem Gleichstromzugang liegt ein DC-Filter 66.

Übliche Fahrzeuge enthalten eine GNSS-Antenne, die mit dem GNSS-Empfänger 12 über das Koaxialkabel 8 verbunden ist. Zum Umrüsten einer solchen störschutzfreien GNSS-Empfangsanlage auf eine CRPA-Empfangsanlage 2 kann die bestehende GNSS-Antenne durch die CRPA-Antenne 4 ausgetauscht werden. Die CRPA-Entstöreinheit 6 wird zwischen Antenne 4 und Koaxialkabel 8 eingefügt. Auf der anderen Seite des Koaxialkabels 8 wird die Steuereinheit 10 vor den GNSS-Empfänger 12 geschaltet. Das Koaxialkabel 8, das vom Ort der Antenne 4 bis zum Ort des GNSS-Empfängers 12 verläuft, kann im Wesentlichen an seinem Platz verbleiben, sodass ein Umbau des Fahrzeugs mit sehr wenig Aufwand verbunden ist.

Zum Betrieb der CRPA-Empfangsanlage 2 kann die Steuereinheit 10 die CRPA-Entstöreinheit 6 ansteuern und/oder mit Software, insbesondere Firmware versorgen. Ein Betrieb kann ein- und ausgeschaltet werden und Betriebsdaten, insbesondere Empfangsdaten, können von der Steuereinheit 10 an der CRPA-Entstöreinheit 6 abgefragt und beispielsweise an das Bedienergerät 40 gegeben werden. Über dieses kann auch eine Initialisierung der CRPA-Entstöreinheit 6 erfolgen. Nach Versorgen der CRPA-Entstöreinheit 6 mit der notwendigen Software und für den Betrieb notwendigen Steuersignalen wird das GNSS-Signal, das Jamming-Signale und/ oder Spoofing-Signale enthalten kann, von der CRPA-Entstöreinheit 6 entstört, sodass das ausgegebene entstörte GNSS-Signal vom GNSS-Empfänger 12 zur Positionsinformation verarbeitet werden kann. Steuerdaten, Informationsdaten und Betriebsdaten werden von der CRPA-Entstöreinheit 6 über das Koaxialkabel 8 zur Steuereinheit 10 geleitet und beispielsweise in Anteilen zum Bedienergerät 40 weitergegeben.

### Bezugszeichenliste

- 2: CRPA-Empfangsanlage
- 4: CRPA-Antenne
- 6: CRPA-Entstöreinheit
- 8: Koaxialkabel
- 10: Steuereinheit
- 12: GNSS-Empfänger
- 14: Fahrzeug
- 16: FPGA
- 18: Eingangselektronik
- 20: Signalweiche
- 22: Schnittstelle
- 24: Schnittstelle
- 26: Datenkabel
- 28: Schnittstelle
- 30: Schnittstelle
- 32: FPGA
- 34: Signalweiche
- 36: Spannungsversorgung
- 38: Schnittstelle
- 40: Bedienergerät
- 42: Anzeigeeinheit
- 44: Eingabeeinheit
- 46: EMV-Filter
- 48: DC/DC-Wandler
- 50: Regler
- 52: Dämpfungsglied
- 54: Umschalter
- 56: EMV-Filter
- 58: Datenrichtung
- 60: HP-Filter
- 62: TP-Filter
- 64: DC-Block
- 66: DC-Filter

## Patentansprüche

1. Verfahren zum Umrüsten einer störschutzfreien GNSS-Empfangsanlage in eine entstörende CRPA-Empfangsanlage (2), bei dem
- eine bestehende GNSS-Antenne gegen eine CRPA-Antenne (4) mit einer CRPA-Entstöreinheit (6) ausgetauscht wird und die CRPA-Entstöreinheit (6) über ein bestehendes Koaxialkabel (8) mit einem GNSS-Empfänger (12) verbunden wird, wobei die CRPA-Entstöreinheit (6) über das Koaxialkabel (8) mit Betriebsspannung (DC) versorgt wird, und
- eine Steuereinheit (10) mit dem Koaxialkabel (8) verbunden wird, die Steuereinheit (10) über das Koaxialkabel (8) eine bidirektionale Kommunikation mit der CRPA-Entstöreinheit (6) führt und von der Steuereinheit (10) über das Koaxialkabel (8) Firmware auf die CRPA-Entstöreinheit (6) aufgespielt wird, wobei die Firmware ein Software-Update umfassend einen neuen Entstöralgorithmus enthält,
- ein GNSS-Signal mit der CRPA-Antenne (4) empfangen und mit der CRPA-Entstöreinheit (6) entstört wird und das entstörte Signal über das Koaxialkabel (8) zu dem GNSS-Empfänger (12) geleitet wird,
- von der Steuereinheit (10) über das Koaxialkabel (8) ein von der CRPA-Antenne (4) empfangenes Signalspektrum abgefragt und das empfangene Signalspektrum von der CRPA-Entstöreinheit (6) über das Koaxialkabel (8) zur Steuereinheit (10) gesendet und einem Bediener zur Kontrolle der Entstörung grafisch angezeigt wird.

2. Verfahren nach einem der vorhergehenden Ansprüche,
**dadurch gekennzeichnet,**
**dass** von der Steuereinheit (10) ein Befehl zum Abschalten einer Filterfunktion der CRPA-Entstöreinheit (6) über das Koaxialkabel (8) an die CRPA-Entstöreinheit (6) gesendet wird.

3. Verfahren nach einem der vorhergehenden Ansprüche,
**dadurch gekennzeichnet,**
**dass** von der Steuereinheit (10) ein Pegelstärkenänderungsbefehl über das Koaxialkabel (8) an die CRPA-Entstöreinheit (6) gesendet wird.

4. Verfahren nach einem der vorhergehenden Ansprüche,
**dadurch gekennzeichnet,**
**dass** sowohl die CRPA-Entstöreinheit (6) als auch die Steuereinheit (10) einen FPGA (16, 32) enthalten und die bidirektionale Kommunikation über das Koaxialkabel (8) zwischen den FPGA (16, 32) geführt wird.

5. Verfahren nach einem der vorhergehenden Ansprüche,
**dadurch gekennzeichnet,**
**dass** das Koaxialkabel (8) von einem Schiffsmast zu einem Datenverarbeitungsraum eines Seeschiffs führt.

6. Verfahren zum Entstören eines GNSS-Signals mit einer CRPA-Entstöreinheit (6), bei dem
- eine Steuereinheit (10) über ein Koaxialkabel (8) eine bidirektionale Kommunikation mit der CRPA-Entstöreinheit (6) führt, wobei die CRPA-Entstöreinheit (6) über dieses Koaxialkabel (8) mit Betriebsspannung (DC) versorgt wird,
- von der Steuereinheit (10) über das Koaxialkabel (8) Firmware auf die CRPA-Entstöreinheit (6) aufgespielt wird, wobei die Firmware ein Software-Update umfassend einen neuen Entstöralgorithmus enthält,
- das GNSS-Signal mit einer CRPA-Antenne (4) empfangen und mit der CRPA-Entstöreinheit (6) entstört wird und das entstörte Signal über das Koaxialkabel (8) zu einem GNSS-Empfänger (12) geleitet wird, und
- von der Steuereinheit (10) über das Koaxialkabel (8) ein von der CRPA-Antenne (4) empfangenes Signalspektrum abgefragt und das empfangene Signalspektrum von der CRPA-
- Entstöreinheit (6) über das Koaxialkabel (8) zur Steuereinheit (10) gesendet und einem Bediener zur Kontrolle der Entstörung grafisch angezeigt wird.

7. CRPA-Empfangsanlage (2) mit einer CRPA-Antenne (4) zum Empfangen eines GNSS-Signals, einer CRPA-Entstöreinheit (6) zum Entstören des GNSS-Signals, einem GNSS-Empfänger (12), einem Koaxialkabel (8) zwischen der CRPA-Entstöreinheit (6) und dem GNSS-Empfänger (12) und einer Steuereinheit (10), die über das Koaxialkabel (8) mit der CRPA-Entstöreinheit (6) verbunden ist, wobei das Koaxialkabel (8) die CRPA-Entstöreinheit (6) mit Betriebsspannung (DC) versorgt, wobei die Steuereinheit (10) vorbereitet ist für eine bidirektionale Kommunikation mit der CRPA-Entstöreinheit (6) über das Koaxialkabel (8), zum Aufspielen von Firmware auf die CRPA-Entstöreinheit (6) über das Koaxialkabel (8), wobei die Firmware ein Software-Update umfassend einen neuen Entstöralgorithmus enthält, zum Abfragen und Empfangen eines von der CRPA-Antenne empfangenen Signalspektrums über das Koaxialkabel (8) und zur grafischen Darstellung des empfangenen Signalspektrums für einen Bediener zur Kontrolle der Entstörung.

## Claims

1. Method for converting a GNSS receiving system having no interference protection into an interference-suppressing CRPA receiving system (2), in which
- an existing GNSS antenna is replaced with a CRPA antenna (4) having a CRPA interference suppression unit (6) and the CRPA interference suppression unit (6) is connected to a GNSS receiver (12) by means of an existing coaxial cable (8), wherein the CRPA interference suppression unit (6) is supplied with operating voltage (DC) by means of the coaxial cable (8), and
- a control unit (10) is connected to the coaxial cable (8), the control unit (10) uses the coaxial cable (8) to conduct bidirectional communication with the CRPA interference suppression unit (6) and the control unit (10) uses the coaxial cable (8) to load firmware onto the CRPA interference suppression unit (6), wherein the firmware contains a software update comprising a new interference suppression algorithm,
- a GNSS signal is received using the CRPA antenna (4) and has interference suppressed using the CRPA interference suppression unit (6), and the interference-suppressed signal is routed to the GNSS receiver (12) by means of the coaxial cable (8),
- the control unit (10) uses the coaxial cable (8) to request a signal spectrum received by the CRPA antenna (4), and the received signal spectrum is sent from the CRPA interference suppression unit (6) to the control unit (10) by means of the coaxial cable (8) and is displayed graphically to an operator in order to control the interference suppression.

2. Method according to one of the preceding claims, **characterized**
**in that** the control unit (10) sends a command for shutting down a filter function of the CRPA interference suppression unit (6) to the CRPA interference suppression unit (6) by means of the coaxial cable (8).

3. Method according to one of the preceding claims, **characterized**
**in that** the control unit (10) sends a level strength change command to the CRPA interference suppression unit (6) by means of the coaxial cable (8).

4. Method according to one of the preceding claims, **characterized**
**in that** both the CRPA interference suppression unit (6) and the control unit (10) contain an FPGA (16, 32) and the bidirectional communication is conducted between the FPGAs (16, 32) by means of the coaxial cable (8).

5. Method according to one of the preceding claims, **characterized**
**in that** the coaxial cable (8) runs from a ship's mast to a data processing room of a seagoing vessel.

6. Method for suppressing interference for a GNSS signal using a CRPA interference suppression unit (6), in which
- a control unit (10) uses a coaxial cable (8) to conduct bidirectional communication with the CRPA interference suppression unit (6), wherein the CRPA interference suppression unit (6) is supplied with operating voltage (DC) by means of this coaxial cable (8),
- the control unit (10) uses the coaxial cable (8) to load firmware onto the CRPA interference suppression unit (6), wherein the firmware contains a software update comprising a new interference suppression algorithm,
- the GNSS signal is received using a CRPA antenna (4) and has interference suppressed using the CRPA interference suppression unit (6), and the interference-suppressed signal is routed to a GNSS receiver (12) by means of the coaxial cable (8), and
- the control unit (10) uses the coaxial cable (8) to request a signal spectrum received by the CRPA antenna (4), and the received signal spectrum is sent from the CRPA interference suppression unit (6) to the control unit (10) by means of the coaxial cable (8) and is displayed graphically to an operator in order to control the interference suppression.

7. CRPA receiving system (2) having a CRPA antenna (4) for receiving a GNSS signal, a CRPA interference suppression unit (6) for suppressing interference for the GNSS signal, a GNSS receiver (12), a coaxial cable (8) between the CRPA interference suppression unit (6) and the GNSS receiver (12) and a control unit (10) that is connected to the CRPA interference suppression unit (6) by means of the coaxial cable (8), wherein the coaxial cable (8) supplies the CRPA interference suppression unit (6) with operating voltage (DC), wherein the control unit (10) is prepared for bidirectional communication with the CRPA interference suppression unit (6) by means of the coaxial cable (8), for loading firmware onto the CRPA interference suppression unit (6) by means of the coaxial cable (8), wherein the firmware contains a software update comprising a new interference suppression algorithm, for requesting and receiving a signal spectrum received by the CRPA antenna by means of the coaxial cable (8) and for graphically displaying the received signal spectrum for an operator in order to control the interference suppression.

## Revendications

1. Procédé de transformation d'une installation de réception GNSS sans protection contre les parasites en une installation de réception CRPA (2), dans lequel
- une antenne GNSS existante est remplacée par une antenne CRPA (4) dotée d'une unité d'antiparasitage CRPA (6), et l'unité d'antiparasitage CRPA (6) est reliée à un récepteur GNSS (12) par l'intermédiaire d'un câble coaxial (8) existant, l'unité d'antiparasitage CRPA (6) étant alimentée en tension de fonctionnement (DC) par l'intermédiaire du câble coaxial (8) ; et
- une unité de commande (10) est connectée au câble coaxial (8), l'unité de commande (10) effectue une communication bidirectionnelle avec l'unité d'antiparasitage CRPA (6) par l'intermédiaire du câble coaxial (8), et un micrologiciel est transféré depuis l'unité de commande (10) vers l'unité d'antiparasitage CRPA (6) par l'intermédiaire du câble coaxial (8), le micrologiciel contenant une mise à jour logicielle comprenant un nouvel algorithme d'antiparasitage ;
- un signal GNSS est reçu par l'antenne CRPA (4) et traité par l'unité d'antiparasitage CRPA (6), et le signal traité est acheminé par l'intermédiaire du câble coaxial (8) vers le récepteur GNSS (12) ;
- un spectre de signal reçu par l'antenne CRPA (4) est demandé par l'unité de commande (10) par l'intermédiaire du câble coaxial (8), et le spectre de signal reçu est envoyé par l'unité d'antiparasitage CRPA (6) à l'unité de commande (10) par l'intermédiaire du câble coaxial (8) et présenté graphiquement à un opérateur pour le contrôle de l'antiparasitage.

2. Procédé selon l'une des revendications précédentes, **caractérisé**
**en ce qu'**une commande de désactivation d'une fonction de filtrage de l'unité d'antiparasitage CRPA (6) est envoyée par l'unité de commande (10) à l'unité d'antiparasitage CRPA (6) par l'intermédiaire du câble coaxial (8).

3. Procédé selon l'une des revendications précédentes, **caractérisé**
**en ce qu'**une commande de modification de niveau d'intensité est envoyée par l'unité de commande (10) à l'unité d'antiparasitage CRPA (6) par l'intermédiaire du câble coaxial (8).

4. Procédé selon l'une des revendications précédentes, **caractérisé**
**en ce que** l'unité d'antiparasitage CRPA (6) ainsi que l'unité de commande (10) contiennent respectivement un FPGA (16, 32) et **en ce que** la communication bidirectionnelle est effectuée par l'intermédiaire du câble coaxial (8) entre les FPGA (16, 32).

5. Procédé selon l'une des revendications précédentes, **caractérisé**
**en ce que** le câble coaxial (8) mène d'un mât de navire à une salle de traitement de données d'un navire de haute mer.

6. Procédé d'antiparasitage d'un signal GNSS au moyen d'une unité d'antiparasitage CRPA (6), dans lequel
- une unité de commande (10) effectue une communication bidirectionnelle avec l'unité d'antiparasitage CRPA (6) par l'intermédiaire d'un câble coaxial (8), l'unité d'antiparasitage CRPA (6) étant alimentée en tension de fonctionnement (DC) par l'intermédiaire de ce câble coaxial (8),
- un micrologiciel est transféré de l'unité de commande (10) vers l'unité d'antiparasitage CRPA (6) par l'intermédiaire du câble coaxial (8), le micrologiciel contenant une mise à jour logicielle comprenant un nouvel algorithme d'antiparasitage,
- le signal GNSS est reçu par une antenne CRPA (4) et traité par l'unité d'antiparasitage CRPA (6), et le signal traité est acheminé par l'intermédiaire du câble coaxial (8) vers un récepteur GNSS (12), et
- un spectre de signal reçu par l'antenne CRPA (4) est demandé par l'unité de commande (10) par l'intermédiaire du câble coaxial (8), et le spectre de signal reçu est envoyé par l'unité d'antiparasitage CRPA (6) à l'unité de commande (10) par l'intermédiaire du câble coaxial (8) et présenté graphiquement à un opérateur pour le contrôle de l'antiparasitage.

7. Installation de réception CRPA (2) comprenant une antenne CRPA (4) pour recevoir un signal GNSS, une unité d'antiparasitage CRPA (6) pour l'antiparasitage du signal GNSS, un récepteur GNSS (12), un câble coaxial (8) entre l'unité d'antiparasitage CRPA (6) et le récepteur GNSS (12) et une unité de commande (10) qui est reliée à l'unité d'antiparasitage CRPA (6) par l'intermédiaire du câble coaxial (8), le câble coaxial (8) alimentant l'unité d'antiparasitage CRPA (6) en tension de fonctionnement (DC), l'unité de commande (10) étant configurée pour une communication bidirectionnelle avec l'unité d'antiparasitage CRPA (6) par l'intermédiaire du câble coaxial (8), pour transférer un micrologiciel vers l'unité d'antiparasitage CRPA (6) par l'intermédiaire du câble coaxial (8), le micrologiciel contenant une mise à jour logicielle comprenant un nouvel algorithme d'antiparasitage, pour demander et recevoir un spectre de signal reçu par l'antenne CRPA par l'intermédiaire du câble coaxial (8) et pour présenter graphiquement le spectre de signal reçu à un opérateur pour le contrôle de l'antiparasitage.
